# FASCICULE DE BREVET EUROPEEN

(11) **EP 3 481 983 B1**
(45) Date de publication et mention de la délivrance du brevet: **06.09.2023**
(21) Numéro de dépôt: 17742501.4
(22) Date de dépôt: 06.07.2017
(51) Int. Cl.: D04B 21/16

(54) **UTILISATION D'UN RENFORT TEXTILE ADAPTE POUR L'EMPLOI DANS UN PROCEDE D'IMPREGNATION PAR UNE RESINE THERMOPLASTIQUE**
ANWENDUNG EINES TEXTILEN VERSTÄRKUNGSMATERIALS ZUR VERWENDUNG IN EINEM TRÄNKUNGSPROZESS MIT THERMOPLASTISCHEM HARZ
USE OF A TEXTILE REINFORCEMENT FOR USE IN A THERMOPLASTIC RESIN IMPREGNATION METHOD

(30) Priorité: 08.07.2016 FR 1656615
(43) Date de publication de la demande: 15.05.2019
(73) Titulaire: Chomarat Textiles Industries, 07160 Le Cheylard (FR)
(72) Inventeur: MAUPETIT, Jérôme, 07360 DUNIERE SUR EYRIEUX (FR)
(74) Mandataire: Cabinet Laurent & Charras
(86) Numéro de dépôt international: PCT/FR2017/051851
(87) Numéro de publication internationale: WO 2018/007766

(56) Documents cités:
- FR-A1- 2 378 117
- FR-A1- 2 594 858
- FR-A6- 2 158 878

## Description

### Domaine technique

L'invention se rattache au domaine de l'industrie textile, et plus précisément à celui des textiles techniques employés pour la réalisation de pièces composites. De telles pièces sont fabriquées en associant une ou plusieurs couches textiles, avec une matrice généralement polymérique qui imprègne ses couches textiles. En fonction des propriétés souhaitées sur le plan mécanique et vis-à-vis de la température, différents types de résine peuvent être employés, et typiquement les résines thermodurcissables ou des résines thermoplastiques.

La présente invention concerne plus spécifiquement les renforts textiles destinés à être imprégnés d'une résine thermoplastique. Elle concerne plus particulièrement l'emploi d'un fil de couture particulier, employé pour la solidarisation des différentes nappes constituant le renfort.

### Techniques antérieures

De façon générale, la fabrication de pièces composites comprend une étape de mise en contact d'un renfort fibreux avec une matrice polymérique et une étape de moulage par laquelle cet ensemble est conformé pour adopter la forme définitive souhaitée pour la pièce composite. La mise au contact de la résine d'imprégnation et du renfort textile peut se faire soit après la fermeture du moule, par exemple dans les procédés dits de RTM (pour Resin Transfert Moulding), ou bien encore préalablement à la fermeture du moule, par aspersion ou dépôt direct de cette résine d'imprégnation sur les couches textiles. Ainsi, la fermeture du moule entraine une montée en pression qui permet d'imprégner les différents plis de renfort dans le sens perpendiculaire au plan principal du renfort.

En pratique, les renforts textiles employés peuvent être de différentes natures, selon le type d'application. Il peut ainsi s'agir de renforts tissés, dans lesquels les fils de chaîne et de trame assurent une action de renfort dans leur direction privilégiée. Il peut également s'agir de renforts constitués par l'association de plusieurs nappes ou ensembles de fils qui sont totalement parallèles, et qui présentent d'une nappe à l'autre des directions différentes. Ces nappes sont solidarisées entre elles après superposition, par la mise en place d'un fil de couture, qui traverse l'ensemble des couches à associer. Contrairement aux étoffes tissées, ces nappes présentent des fils qui sont les plus rectilignes possibles, et donc sans embuvage, et répondent à l'appellation classique de NCF, pour Non Crimped Fabric.

Différentes difficultés techniques peuvent apparaître au fur et à mesure de l'enchaînement des étapes conduisant à la réalisation de la pièce composite. Ainsi, dans un premier temps, le textile est découpé à la forme souhaitée de la pièce définitive. À cette occasion, les zones de découpe, notamment lorsqu'elles présentent un angle faible par rapport à celui des fils découpés, sont sujettes à des risques d'effilochage. En effet, en particulier lorsque les fils employés sont des mèches de filaments parallèles, ou rovings, les filaments découpés ne sont que faiblement retenus, et peuvent facilement se séparer du reste du textile auquel ils ne sont maintenus que par la friction avec le fil de couture.

Dans un deuxième temps, le textile découpé est ensuite disposé dans le moule, qui présente fréquemment une forme tridimensionnelle. Le maintien de la forme tridimensionnelle du textile drapé dans le moule, ou le maintien en forme de ce même textile préformé sur un gabarit intermédiaire, posent des problèmes, dans la mesure où le textile est relativement flexible, et qu'il n'est pas bloqué en position. La solution décrite dans le document EP 1 781 445, qui consiste à employer un textile présentant une couche d'un adhésif repositionnable, n'est pas totalement satisfaisante. En effet, l'adhésif ajouté constitue un apport de matière qui n'est pas forcément compatible avec la résine qui servira à l'imprégnation ultérieure. En outre, la présence de cet adhésif perturbe voire empêche la circulation de la résine d'imprégnation au niveau de la face où elle est présente.

Une autre difficulté rencontrée se manifeste lors du moulage, lorsque la résine d'imprégnation est mise au contact du textile. En effet, pour assurer une circulation satisfaisante, la résine d'imprégnation doit être portée à une température élevée, de l'ordre de 120 à 180°C pour des procédés de type thermocompression SMC et de l'ordre de 250°C, et plus fréquemment proche de 300°C, pour des procédés de mise en oeuvre de composites à matrices thermoplastiques de type polyamide (PA), voire de 400°C pour les polymères à hautes performances. À cette température, les fils employés pour assurer la couture des différentes couches textiles entre elles sont ramollis, voire fondus. Dans ces conditions, le fluage de la résine d'imprégnation autour et à l'intérieur du renfort textile provoque la déformation de celui-ci, et le déplacement de certains fils par rapport aux autres. Il s'ensuit un défaut d'homogénéité du renfort textile au sein de la pièce composite. Ce problème est d'autant plus sensible que l'on souhaite obtenir une pièce composite à haute teneur en fibres. En effet, dans ce cas, les pressions exercées sur le renfort sont très élevées pour fortement essorer le renfort, avec des contraintes importantes sur les fils, et des risques accrus de déformation du renfort. L'emploi d'un fil de couture résistant à la température, et en particulier en verre, n'est pas réellement satisfaisant, puisque ce type de fil est relativement fragile, et que lors des opérations de couture, il pourrait être amené à se casser, outre le fait qu'il userait exagérément les têtes de couture. L'emploi de fils moins abrasifs tels qu'à base de polysulfure de phénylène (PPS) ou de polyétheréthercétone (PEEK) permettrait de limiter ces phénomènes d'usure, mais ne fournit pas de solution au problème de l'effilochage et du préformage. En outre, de tels fils restent limités en tenue thermique.

Le document FR 2 378 117 décrit un complexe textile utilisable pour la réalisation de matériaux composites, dans lesquels les fils de renforts sont maintenus les uns par rapport aux autres grâce à une couture réalisée à partir d'un fil de couture et incluant de façon localisée des fibres à base de polychlorure de vinyle.

Le document WO 02/04725 décrit un renfort textile comportant des fils de couture qui sont réalisés en filaments thermoplastiques enrobés en matière thermofusible, qui n'assurent donc plus d'effet de tenue mécanique du renfort lorsqu'ils sont complètement fondus. Le document FR 2 594 858 décrit un renfort textile incluant des fils de couture constitués d'une âme de filaments de verre gainée d'une couche de polyamide. Malheureusement, une telle solution reste limitée en processabilité pour les opérations de couture. En effet, l'enduction sous forme de gaine autour du fil d'âme engendre une rigidité du fil trop importante pour une utilisation optimale en tant que fil de couture. Un fil trop rigide ne peut pas en effet suivre les angles de déviation propres au procédé de couture (et notamment lors du passage des aiguilles). La vitesse de la machine de couture doit être dans ce cas abaissée. De plus, tout défaut d'enduction va générer un point de faiblesse et une casse du fil dans le process de couture.

### Exposé de l'invention

L'invention vise donc à fournir l'utilisation d' un renfort qui pallie les différents inconvénients évoqués ci-dessus, et qui présente donc de bonnes propriétés vis-à-vis de l'effilochage, qui permette de réaliser simplement des préformes, et qui possède surtout une bonne cohésion mécanique lors des opérations de moulage à haute température.

L'invention concerne donc un renfort textile adapté pour l'emploi dans un procédé d'imprégnation par une résine d'imprégnation thermoplastique, en vue de la réalisation de pièces composites par exposition du renfort à cette résine, à une température de mise en oeuvre du procédé, bien évidemment supérieure à la température de fusion de la résine d'imprégnation. Ce renfort textile comporte au moins un ensemble de fils de haute ténacité sensiblement parallèles, typiquement à base de verre, de carbone ou analogue. Ce renfort comporte également un fil cousu au travers de ce ou ces ensembles de fils pour en assurer la cohésion.

Conformément à l'invention, ce fil de couture comporte un groupe de filaments présentant une température de fusion supérieure à la température de mise en oeuvre de ladite résine thermoplastique d'imprégnation, et un groupe de filaments réalisés à partir d'une matière thermoplastique, miscible voire soluble dans la résine d'imprégnation, et présentant une température de fusion inférieure à la température de mise en oeuvre de ladite résine thermoplastique d'imprégnation. Ces deux groupes de filaments de natures distinctes sont assemblés par comélage, retordage ou par guipage.

Autrement dit, l'invention consiste à assurer la couture du renfort avec un fil incluant une fraction résistante aux températures observées pendant les opérations de moulage. Ainsi, la tenue mécanique du renfort est conservée pendant que le moulage intervient, et que la résine flue transversalement travers du renfort. Complémentairement, la fraction complémentaire du fil de couture est thermofusible et compatible avec la résine d'imprégnation, de sorte qu'elle ne crée pas de zones de fragilité dans la pièce composite puisque cette fraction du fil de couture se noie dans la résine d'imprégnation du renfort. De plus, cette fraction du fil de couture étant fondue pendant l'opération de moulage, la place qu'elle occupe dans le trou formé par le fil de couture se réduit, et elle permet un réarrangement des filaments du renfort dans une configuration plus rectiligne.

Cette fraction thermoplastique facilite les opérations de couture, puisqu'elle permet de limiter la friction entre le fil de couture et la tête de couture.

Cette fraction thermofusible présente d'autres effets avantageux, puisqu'elle peut être aisément ramollie ou fondue avant même la mise en moule, pour ainsi assurer un collage des fils et filaments avec lesquels elle est au contact. Ceci permet en particulier de bloquer ces filaments, et limiter les risques d'effilochage au niveau des régions de découpe. Ce collage partiel du renfort niveau des fils de couture peut également être avantageux pour assurer un maintien en forme du renfort lorsque celui-ci est disposé dans le moule, mise en place sur une préforme.

En pratique, il est possible de réaliser ce fil de couture de différentes manières. On parle de comélage lorsque les filaments des deux types différents sont rassemblés avant d'être soumis à une opération de moulinage permettant d'obtenir des fils ou des brins combinant intimement les deux types de filaments. On parle de retordage lorsque que les groupes de filaments subissent chacun un moulinage afin d'obtenir des brins homogènes, qui sont ensuite assemblés par retordage en formant des hélices imbriquées. On parle de guipage lorsque les deux brins de natures différentes sont assemblés, avec l'un des brins qui est enroulé autour de l'autre, sensiblement rectiligne généralement appelé fil d'âme, autour duquel le fil de guipage forme une hélice.

Le titre final de l'ensemble de ces filaments doit être compatible à l'utilisation de cet ensemble comme fil de couture. Le titre final peut être avantageusement compris entre 20 et 300 dtex

En pratique, ce fil de couture peut être employé sur différents types de renforts. Ainsi, ce renfort peut être du type NCF, avec une seule couche dans laquelle les fils ne présentent aucun embuvage. Un tel renfort, unidirectionnel, peut être associé à une couche de support formée par un matériau fibreux, dont les fibres ne sont pas parallèles à ceux de la couche de renfort. Cette couche de support peut être un non tissé, de type voile léger, ou encore un ensemble de fils parallèles disposés parallèlement et espacés les uns des autres, pour former un tramage également léger, permettant de retenir le fil de couture. Il est également possible d'obtenir la cohésion de la couche de fils de renfort uniquement par le fil de couture avec une couture réalisée selon un point de tricot. Bien entendu, le renfort peut comporter plusieurs couches formées chacune par un ensemble de fils de haute ténacité sensiblement parallèles, et dans lequel les orientations des fils des deux couches adjacentes sont distinctes, pour former un renfort multiaxial. Le fil de couture caractéristique assure alors une solidarisation des différentes nappes entre elles, qui est nécessaire pour la manipulation, et de manière plus générale la tenue mécanique du renfort.

Ce fil de couture peut également être employé pour des tissus, dans lequel les ensembles de fils sont tissés entre eux. Dans ce cas, bien que le tissage assure intrinsèquement une certaine cohésion mécanique du renfort, l'emploi du fil de couture caractéristique renforce cette cohésion lors du fluage de la résine, mais surtout permet de profiter de la réduction des risques d'effilochage, et surtout la possibilité d'un maintien en forme après mise sur préforme.

Dans une forme particulière de l'invention, le fil de couture comporte au moins deux groupes distincts de filaments réalisés à partir d'une matière thermoplastique, miscible dans la résine d'imprégnation, et présentant une température de fusion inférieure à la température de fusion de ladite résine thermoplastique d'imprégnation. Chaque groupe de filaments est guipé autour du groupe de filaments présentant une température de fusion supérieure à la température de fusion de ladite résine thermoplastique d'imprégnation, et deux de ces groupes de filaments sont guipés dans des sens opposés.

En d'autres termes, le fil de couture comporte un fil d'âme qui présente une résistance aux conditions de température observées pendant l'imprégnation, qui est recouvert de deux fils (ou plus) guipés en sens opposés, de telle sorte que le fil de guipage extérieur bloque en quelque sorte le fil de guipage intérieur, ce qui limite les risques de déchaussement de ce fil intérieur lorsque le fil de couture est soumis aux contraintes mécaniques pendant les opérations de couture à travers le renfort.

Avantageusement en pratique, les groupes distincts de filaments réalisés à partir d'une matière thermoplastique, miscible dans la résine d'imprégnation, présentent des températures de fusion différentes. Autrement dit, une première exposition à la chaleur permet de ramollir le fil de guipage de plus faible température de transition vitreuse, afin de fixer l'autre fil de guipage, et ainsi rendre l'ensemble plus résistant au déchaussement pendant la couture.

L'activation thermique peut également intervenir après la couture, pour fixer les fils du renfort et assurer une résistance à l'effilochage du renfort. Dans ce cas, le fil de plus faible température de fusion sera préférentiellement positionné à l'extérieur.

Complémentairement, l'activation thermique de l'autre fil de guipage peut permettre de fixer le renfort lorsqu'il est mis en forme tridimensionnelle.

Selon les applications, la couture peut intervenir soit lors de la fabrication du renfort par une couture traditionnelle dans le plan du renfort, soit encore après la mise en forme du renfort sur une préforme, par une couture tridimensionnelle. Le fil de couture caractéristique peut être employé seul, et assurer à lui seul l'amélioration du maintien du renfort. Ce maintien peut aussi être complété par l'emploi d'autres fils de coutures traditionnels.

De manière générale, les filaments du fil de couture résistants à la température sont en une matière qui peut être choisie dans le groupe comprenant préférentiellement le verre, mais également l'aramide, le carbone, le basalte, le quartz, les polymères à cristaux liquides et le coton. Le titre du fil est choisi en fonction des applications. Il peut être très fin pour limiter l'impact de ce fil dans le composite finale, ou encore être plus élevé si un fort besoin de tenue mécanique est requis.

Avantageusement pratique, la matière composant les filaments miscibles est choisie dans la même famille chimique que la résine d'imprégnation. Il peut donc en particulier s'agir d'une résine polyamide, utilisée pour être compatible avec la résine de polyamide 6 (PA6) ou 6,6 (PA66) utilisée pour l'imprégnation des renforts. Il peut également s'agir d'une résine acrylique utilisée pour sa compatibilité avec une résine d'imprégnation à base de méthyl méthacrylate ou d'acrylonitrile butadiène styrène (ABS). Pour des applications d'imprégnation à base de résine de type polysulfure de phénylène (PPS), on peut choisir préférentiellement une matière de fil à base de résine PPS. Pour des applications d'imprégnation à base de résine de type polyaryléthercétones (PAEK), on peut choisir préférentiellement une matière de fil à base de résine PAEK, tel que les polyétheréthercétones (PEEK) ou les polyéthercétonecétones (PEKK) et par exemple, plus particulièrement une résine PEKK dont le point de fusion sera inférieur à celui de la résine PEEK d'imprégnation.

La résine d'enduction formant la fraction thermofusible du fil de couture présente avantageusement un point de ramollissement suffisamment bas, typiquement inférieur d'au moins 20°C par rapport à la température de fusion du polymère injecté, pour permettre de fixer le renfort à basse température, et d'être fondu lors du procédé d'injection. Pour les matériaux amorphes, qui ne possèdent pas à proprement parler de température de fusion, on assimilera au sens du présent brevet la température de fusion à la température de transition vitreuse, au-delà de laquelle la matière voit ses propriétés mécaniques très fortement réduites.

Un premier exemple de l'utilisation d'un renfort conforme invention est le suivant.

Le renfort est réalisé à base de tissu composé de fibres de carbone avec un titre de 12K, correspondant à une masse surfacique de l'ordre de 300 g/m², tel que le produit commercialisé sous la référence « C-WEAVE 300T 12K HS » par le Demandeur. Ce tissu reçoit un fil de couture, cousu selon un point de chainette ou un point de tricot de 4mm de pas. Le fil de couture présente un fil d'âme qui est un fil de verre, d'un titre de 5,5 tex. Ce fil d'âme possède une température de fusion supérieure à 800°C. Il est recouvert d'un premier fil de guipage à base de polyamide 66, de titre 44 dtex, à raison de 200 tours/mètre dans le sens Z (ou S), qui possède un point de fusion de l'ordre de 260°C, et qui a subi un traitement de texturation. Le fil reçoit un second fil de guipage identique, guipé en quantité équivalente, mais dans le sens S (ou respectivement Z). Un tel renfort est particulièrement adapté pour la réalisation de pièces composite imprégnées d'une résine de PA6 ou PA66. Des réalisations de plaques par imprégnation de ces tissus avec une résine PA66 à 300°C montrent l'intérêt de cette couture en termes de maintien de l'orientation des fibres lors de la mise en pression à haute température.

Un deuxième exemple de l'utilisation d'un renfort conforme à l'invention est le suivant : Le renfort est réalisé à base de NCF et est composé de deux nappes de fibres de carbone orientées à +45° et -45°, correspondant à une masse surfacique de l'ordre de 150 g/m², tel que commercialisé par le Demandeur sous la référence « C-PLY BX150 ». Le fil de couture employé est similaire à celui de l'exemple précédent, avec une âme formée d'un fil de verre de 55 dtex, Il est recouvert d'un premier fil de guipage à base de polyamide 66, de titre 44 dtex, à raison de 200 tours/mètre dans le sens Z (ou S), qui possède un point de fusion de l'ordre de 260°C, et qui a subi un traitement de texturation. Le fil reçoit un second fil de guipage à base de polyamide 11, de titre 44 dtex, à raison de 200 tours/mètre dans le sens Z (ou S), qui possède un point de fusion de l'ordre de 190°C, et qui a subi un traitement de texturation. Ce second fil est guipé avec un nombre de tours équivalent au premier, mais dans le sens S (ou respectivement Z), pour donner un titre total du fil de couture de l'ordre de 150 dtex. Un tel renfort est particulièrement adapté pour la réalisation de pièces composites, imprégnées d'une résine de PA6 ou PA66.

La réactivation du produit cousu à 210°C permet de bloquer les fibres et donner une propriété anti-effilochage au renfort cousu, de sorte que lors de la découpe du renfort, les fibres sont maintenues ensemble. Des essais de préformage de ce renfort par superposition de 3 plis et réactivation à 210°C, montrent que le fil en couture caractéristique permet de coller les plis ensemble.

Un troisième exemple de l'utilisation d'un renfort conforme à l'invention est le suivant : Le renfort est réalisé à base de NCF et est composé de deux nappes de fibres de carbone à +45° et -45°, correspondant à une masse surfacique de l'ordre de 150 g/m², tel que commercialisé par le Demandeur sous la référence « C-PLY BX150 ». Le fil de couture employé est de structure similaire à celui de l'exemple précédent, avec une âme formée d'un fil de verre multifilament de 28 dtex, Il est recouvert d'un premier fil de guipage à base de Polyetherethercetone (PEEK) monofilament, de titre 50 dtex, à raison de 200 tours/mètre dans le sens Z (ou S), qui possède un point de fusion de l'ordre de 340°C. Le fil reçoit un second fil de guipage à base de PEEK monofilament, de titre 50 dtex, qui possède un point de fusion de l'ordre de 340°C. Ce second fil est guipé avec un nombre de tours équivalent au premier, mais dans le sens S (ou respectivement Z) pour donner un titre total du fil de couture de l'ordre de 130 dtex. Un tel renfort est particulièrement adapté pour la réalisation de pièces composites, imprégnées d'une résine de PEEK.

Un quatrième exemple de l'utilisation d'un renfort conforme à l'invention est le suivant : Le renfort est réalisé à base de NCF et est composé fibre de verre à +45° et -45°, correspondant à une masse surfacique de l'ordre de 600 g/m², tel que commercialisé par le Demandeur sous la référence « G-PLY BX600 ». Le fil de couture employé est constitué d'une âme formée d'un fil de verre multifilament de 55 dtex, Il est retordu avec un fil de PPS multifilament texturé de titre 78 dtex, à raison de 200 tours/mètre dans le sens Z ou S. Le fil de PPS possède un point de fusion de l'ordre de 280°C. Le titre total du fil de couture est de l'ordre de 130 dtex. Un tel renfort est particulièrement adapté pour la réalisation de pièces composites, imprégnées d'une résine de PPS.

Il ressort de ce qui précède que le renfort peut être utilisé de différentes manières particuliers comme :
- produit semi-fini pour la fabrication des organosheets, formé par l'empilement de plusieurs couches de ce même renfort, de plusieurs couches de films thermoplastiques ;
- produit semi-fini dans la fabrication de pré-imprégnés thermoplastiques. La résine d'imprégnation est alors déposée sur ou dans le renfort par un procédé de poudrage ou d'imprégnation ;
- produit semi-fini dans la fabrication de pré-imprégnés destinés à être mise en oeuvre par moulage de type SMC,
- produit semi-finis dans la fabrication de pré-imprégnés ou produits finis profilés, obtenus par pultrusion. Ce renfort cousu étant utilisé en renforcement transverse en complément des fils à 0° apportés classiquement par le procédé de pultrusion. Les pressions générées dans la filière de pultrusion contenant la résine à haute viscosité nécessitent un maintien des fils dans le renfort transverses afin de conserver l'orientation de ces fils et donc le renforcement transverse du profilé ou préimprégné,
- armure de renfort principale dans un procédé d'injection ou d'infusion de résine.

Un tel renfort présente une bonne tenue mécanique à haute température, du fait de la couture avec un fils présentant une ténacité suffisante pendant le chauffage, ainsi qu'une amélioration à l'effilochage et au maintien en préforme du fait de la capacité des fils thermoplastiques constituant le fil de couture à assurer un certain blocage des fils composant le renfort.

## Revendications

1. Utilisation d'un renfort textile pour l'emploi dans un procédé d'imprégnation par une résine d'imprégnation thermoplastique, en vue de la réalisation de pièces composites, ledit renfort comportant au moins un ensemble de fils de haute ténacité, chaque ensemble comportant des fils sensiblement parallèles, et un fil de couture cousu au travers du au moins un ensemble pour en assurer la cohésion, le fil de couture comportant un groupe de filaments présentant une température de fusion supérieure à la température de mise en oeuvre de ladite résine thermoplastique d'imprégnation, **caractérisé par** un groupe de filaments réalisés à partir d'une matière thermoplastique, miscible dans la résine d'imprégnation, et présentant une température de fusion inférieure à la température de mise en oeuvre de ladite résine thermoplastique d'imprégnation, les deux groupes de filaments étant assemblés par retordage ou guipage.

2. Utilisation selon la revendication 1, **caractérisé en ce que** l'ensemble de fils est une nappe sans embuvage.

3. Utilisation selon la revendication 1, **caractérisé en ce qu'**il comporte deux ensembles de fils qui sont tissés entre eux.

4. Utilisation selon la revendication 1, **caractérisé en ce qu'**il comporte une seule couche formée par un ensemble de fils de haute ténacité sensiblement parallèles, et une couche de support formée par un matériau fibreux dont les fibres ne sont pas parallèles à ladite couche de fils de haute ténacité.

5. Utilisation selon la revendication 4, **caractérisé en ce que** la couche support est formée par un non tissé.

6. Utilisation selon la revendication 4, **caractérisé en ce que** la couche support est formée par un ensemble de fils parallèles et espacés les uns des autres.

7. Utilisation selon la revendication 1, **caractérisé en ce qu'**il comporte au moins deux groupes distincts de filaments réalisés à partir d'une matière thermoplastique, miscible dans la résine d'imprégnation, et présentant une température de fusion inférieure à la température de mise en oeuvre de ladite résine thermoplastique d'imprégnation, chaque groupe de filaments étant guipé autour du premier groupe de filaments présentant une température de fusion supérieure à la température de mise en oeuvre de ladite résine thermoplastique d'imprégnation, deux desdits groupes de filaments étant guipés dans des sens opposés.

8. Utilisation selon la revendication 7, **caractérisé en ce que** les groupes distincts de filaments réalisés à partir d'une matière thermoplastique, miscible dans la résine d'imprégnation, présentent des températures de fusion différentes.

9. Utilisation selon l'une des revendications précédentes, **caractérisé** ce que les filaments présentant une température de fusion supérieure à la température de fusion de la résine thermoplastique d'imprégnation sont réalisés à partir d'une matière choisie dans le groupe comprenant le verre, le coton, l'aramide, les polymères à cristaux liquides, le carbone, le quartz, le basalte.

10. Utilisation selon l'une des revendications précédentes, **caractérisé en ce que** les filaments réalisés à partir d'une matière thermoplastique, miscible dans la résine d'imprégnation, et présentant une température de fusion inférieure à la température de mise en oeuvre de ladite résine thermoplastique d'imprégnation, sont réalisés à partir d'une matière est choisie dans le groupe comprenant les polyamides, les polysulfure de phénylène, les résines acryliques, les polyimides, les polyesters, les polyaryléthercétones.

11. Utilisation selon la revendication 1, **caractérisé en ce que** les filaments présentant une température de fusion supérieure à la température de fusion de la résine thermoplastique d'imprégnation, présentent une température de fusion ou une température de transition vitreuse supérieure à 250°C.

12. Utilisation selon l'une des revendications précédentes, **caractérisé en ce que** fil de couture présente un titre compris entre 20 et 300 dtex.

## Patentansprüche

1. Anwendung eines textilen Verstärkungsmaterials zur Verwendung in einem Tränkungsprozess durch ein thermoplastisches Tränkungsharz zur Herstellung von Verbundteilen, dieses Verstärkungsmaterial enthält mindestens einen Komplex hochfester Fäden, wobei jeder Komplex im Wesentlichen parallele Fäden enthält, sowie einen Nähfaden, der durch diesen mindestens einen Komplex genäht ist, um für eine Kohäsion zu sorgen, der Nähfaden enthält dabei eine Fasergruppe, mit einer Schmelztemperatur, die höher liegt als die Einsatztemperatur dieses thermoplastischen Tränkungsharzes, **gekennzeichnet durch** eine Fasergruppe, hergestellt aus einem thermoplastischen Material, das mit dem Tränkungsharz vermischt werden kann und eine Schmelztemperatur aufweist, die niedriger liegt als die Einsatztemperatur dieses thermoplastischen Tränkungsharzes, wobei die beiden Fasergruppen **durch** Verzwirnen oder Umwickeln miteinander verbunden sind.

2. Anwendung nach Anspruch 1, **dadurch gekennzeichnet, dass** es sich bei dem Fadenkomplex um eine Bahn ohne Welligkeit handelt.

3. Anwendung nach Anspruch 1, **dadurch gekennzeichnet, dass** sie zwei Fadenkomplexe enthält, die untereinander verwebt sind.

4. Anwendung nach Anspruch 1, **dadurch gekennzeichnet, dass** sie eine einzige Schicht enthält, die aus einem Komplex hochfester, im Wesentlichen paralleler Fäden besteht und eine Trägerschicht, gebildet aus einem Fasermaterial, dessen Fasern nicht parallel zur erwähnten Schicht hochfester Fäden ist.

5. Anwendung nach Anspruch 4, **dadurch gekennzeichnet, dass** die Trägerschicht aus einem Vlies besteht.

6. Anwendung nach Anspruch 4, **dadurch gekennzeichnet, dass** die Trägerschicht aus einem Komplex paralleler Fäden, mit Abstand zueinander besteht.

7. Anwendung nach Anspruch 1, **dadurch gekennzeichnet, dass** sie mindestens zwei verschiedene Fasergruppen enthält, die aus einem thermoplastischen Material bestehen, das mit dem Tränkungsharz vermischt werden kann und eine Schmelztemperatur aufweist, die niedriger liegt als die Einsatztemperatur dieses thermoplastischen Tränkungsharzes, jede der beiden Fasergruppen ist um die erste Fasergruppe gewickelt, die eine Schmelztemperatur hat, zwei dieser Fasergruppen sind jeweils in Gegenrichtung gewickelt.

8. Anwendung nach Anspruch 7, **dadurch gekennzeichnet, dass** die verschiedenen Fasergruppen, hergestellt aus einem thermoplastischen Material, das mit dem Tränkungsharz vermischt werden kann, eine unterschiedliche Schmelztemperatur aufweisen,

9. Anwendung nach einem der vorangehenden Ansprüche, **dadurch gekennzeichnet, dass** die Fasern, die eine höhere Schmelztemperatur aufweisen, als die Schmelztemperatur des thermoplastischen Tränkungsharzes aus einer Gruppe ausgewählt werden, zu der Glas, Baumwolle, Aramid, Flüssigkristall-Polymer, Kohlenstoff, Quarz und Basalt gehören.

10. Anwendung nach einem der vorangehenden Ansprüche, **dadurch gekennzeichnet, dass** die Fasern, hergestellt aus einem thermoplastischen Material, das mit dem Tränkungsharz vermischt werden kann und eine Schmelztemperatur aufweist, die niedriger liegt als die Einsatztemperatur dieses thermoplastischen Tränkungsharzes, aus einem Material hergestellt werden, das zur Gruppe mit Polyamiden, Polyphenylensulfid, Acrylharzen, Polyimiden, Polyester und Polyaryletherketonen gehören.

11. Anwendung nach Anspruch 1, **dadurch gekennzeichnet, dass** die Faser, die eine Schmelztemperatur über der Schmelztemperatur des thermoplastischen Tränkungsharzes aufweisen, eine Schmelztemperatur oder eine Glasübergangstemperatur von über 250°C aufweisen.

12. Anwendung nach einem der vorangehenden Ansprüche, **dadurch gekennzeichnet, dass** der Nähfaden einen Titer zwischen 20 und 300 dtex aufweist.

## Claims

1. Use of a textile reinforcement in a thermoplastic resin impregnation method, with a view to producing composite parts, said textile reinforcement comprising at least one set of high-tenacity yarns, each set comprising substantially parallel yarns, and a sewing yarn sewn through the at least one set to ensure the cohesion thereof, the sewing yarn comprising a group of filaments having a melting temperature higher than the application temperature of the said thermoplastic impregnation resin, **characterized by** a group of filaments produced from a thermoplastic material, miscible in the impregnation resin, and having a melting temperature lower than the application temperature of the said thermoplastic impregnation resin, the two groups of filaments being assembled by twisting or wrapping.

2. The use according to claim 1, **characterized in that** the set of yarns is a ply without crimping.

3. The use according to claim 1, **characterized in that** it comprises two sets of yarns that are woven together.

4. The use according to claim 1, **characterized in that** it comprises a single layer formed by a set of substantially parallel high-tenacity yarns, and a support layer formed by a fibrous material the fibers of which are not parallel to said layer of high-tenacity yarns.

5. The use according to claim 4, **characterized in that** the support layer is formed by a non-woven fabric.

6. The use according to claim 4, **characterized in that** the support layer is formed by a set of parallel yarns spaced apart from each other.

7. The use according to claim 1, **characterized in that** it comprises at least two distinct groups of filaments produced from a thermoplastic material, miscible in the impregnation resin, and having a melting temperature lower than the application temperature of the said thermoplastic impregnation resin, each group of filaments being wrapped around the first group of filaments having a melting temperature greater than the application temperature of the said thermoplastic impregnation resin, and two of the said groups of filaments being wrapped in opposite directions.

8. The use according to claim 7, **characterized in that** the distinct groups of filaments produced from a thermoplastic material, miscible in the impregnation resin, have different melting temperatures.

9. The use according to any one of the preceding claims, **characterized in that** the filaments having a melting temperature higher than the melting temperature of the thermoplastic impregnation resin are made of a material that can be chosen from the group preferably comprising glass, cotton, aramid, liquid crystal polymers, carbon, quartz, basalt.

10. The use according to any one of the preceding claims, **characterized in that** the filaments produced from a thermoplastic material, miscible in the impregnation resin and having a melting temperature lower than the application temperature of the said thermoplastic impregnation resin, are produced from a material chosen from the group comprising polyamides, polyphenylene sulfide, acrylic resins, polyimides, polyesters, polyaryletherketones.

11. The use according to claim 1, **characterized in that** the filaments having a melting temperature higher than the melting temperature of the thermoplastic impregnation resin, have a melting temperature or glass transition temperature of more than 250°C.

12. The use according to any one of the preceding claims, **characterized in that** the sewing yarn has a yarn count of between 20 and 300 dtex.
